# EUROPEAN PATENT APPLICATION

(11) **EP 2 910 472 A1**
(43) Date of publication of application: **26.08.2015**
(21) Application number: 15154804.7
(22) Date of filing: 12.02.2015
(51) Int. Cl.: B64D 11/00, G06Q 10/08

(54) **Apparatus and method to monitor the occupied volume within a fixed or variable volume**

(30) Priority: 25.02.2014 US 201414189045
(71) Applicant: Astronics Advanced Electronic Systems Corp., Kirkland, WA 98034 (US)
(72) Inventor: Jouper, Jeffrey A., Newcastle, WA Washington 98056 (US); Peabody, Mark, Redmond, WA Washington 98053 (US)
(74) Representative: Manitz, Finsterwald & Partner GbR

(57) **Abstract**

Disclosed is a system and method for monitoring a storage container (102; 502). Sensors (103; 306; 506) and a control circuit (104; 302; 504) are used to determine the amount of occupied space in the interior of a container or set of containers (102; 502). Information regarding the occupied space within the container (102; 502) can be presented on a display (106; 312; 402; 507), which may optionally be local to the container (102; 502) or at a centralized location. The determination may accommodate varying volume of the container depending on whether it is open or closed. Further inputs may adjust for variations in sensor operation depending on environmental factors such as temperature and altitude.

## Description

### FIELD OF THE DISCLOSURE

The subject matter of the present disclosure generally relates to the monitoring of the volume within a container, and more particularly relates to the monitoring of occupied volume within a container through the use of electronic sensors.

### BACKGROUND OF THE DISCLOSURE

Frequent access to a container, and in particular frequent loading and unloading, can present various problems to those seeking to utilize the container's space in an efficient and timely manner.

For instance, commercial aircraft typically have overhead stowage bins for the safe storage of personal items during periods of flight. In the course of each flight, the carry-on items of the passengers, and often flight crew, must be stored in the stowage bins prior to the inception of the flight and retrieved in order for passengers to disembark at the end of the flight. Often, the amount of available stowage space is taxed by the volume of passenger luggage, particular in light of efforts to increase seat utilization rates. Thus, efficient loading of the stowage bins is important. In the limited travel area of the aisle(s) of a passenger aircraft, the rapid influx of the passengers makes such a task difficult. Often, flight crew members attempt to aid passengers in the storage of their luggage, however doing so can create additional delay as the flight crew must move up and down the aisle(s). Furthermore, it is desirable to keep the hatches on many overhead stowage bins in the closed position when possible to avoid passengers' collision with these hatches and to prevent injury from falling luggage. Stowage bins are also built in many different configurations with varying depths, widths and heights, further complicating the task of monitoring their utilization.

These circumstances often make it desirable to load stowage bins to their full capacity and then close them during pre-flight boarding of the passenger aircraft. However, this often requires flight crew members or passengers to traverse the aisle(s), visually checking each successive stowage bin for sufficient space in which to place even a single baggage item, thereby impeding the ability of passengers and flight crew to complete the pre-flight boarding process in an orderly manner. This can, in turn, lead to flight delays and wasted energy associated with the aircraft sitting on the tarmac. Overall, such issues lead to delays, additional costs, and an overall reduction in passenger satisfaction.

The subject matter of the present disclosure is directed to overcoming, or at least reducing the effects of, one or more of the problems set forth above.

### BRIEF SUMMARY OF THE DISCLOSURE

Disclosed is a system and method to monitor the occupied volume within a fixed or variable volume. In an embodiment, several sensors monitor the volume within a container, and communicate with a control circuit which determines the portion of the container that is occupied. This information can be passed to a display, which optionally is remote, allowing a user to quickly and efficiently monitor the utilization of the container.

In a particular embodiment, the utilization of each of the stowage bins of a passenger aircraft is monitored by a monitoring unit containing a control circuit and ultrasonic sensors. Information regarding remaining stowage capacity is relayed to a centralized display and/or to a number of localized displays. Additional inputs may be optionally used to adjust for changes in temperature or altitude or other environmental conditions, or for the difference in container volume that may occur in certain drop-down stowage bins. The system and method are adaptable for use with a wide variety of containers, including the retrofitting of previously existing containers, because the empty container volume is determined and used as a baseline against which the container utilization is compared.

The disclosed subject matter presents several advantages in the realm of passenger aircraft. Flight attendant workload is reduced by the ability to centrally monitor available stowage space or quickly identify available stowage space via localized displays. Passengers may also make use of the disclosed subject matter in certain embodiments. Thus, the boarding process is expedited and efficient stowage of luggage is facilitated. Aircraft generally require less time to complete the boarding process, alleviating flight delays, reducing costs, and increasing passenger satisfaction.

### BRIEF DESCRIPTION OF THE DRAWINGS

The foregoing summary, preferred embodiments, and other aspects of the present disclosure will be best understood with reference to a detailed description of specific embodiments, which follows, when read in conjunction with the accompanying drawings, in which:
Figure 1A is an illustration of a front view of an embodiment having a plurality of ultrasonic sensors.
Figure 1B is an illustration of the embodiment of Figure 1A in which an object occupies a portion of the space in the container.
Figure 2 is a flowchart diagram of an embodiment.
Figure 3 is a schematic drawing of the electronic components of an embodiment.
Figure 4 is an illustration of the display of an embodiment.
Figure 5 is an overhead schematic drawing of an embodiment monitoring multiple stowage bins.
Like reference numbers and designations in the various drawings indicate like elements.

### DETAILED DESCRIPTION

Disclosed is a system and method for monitoring the utilization of containers of fixed and variable volume.

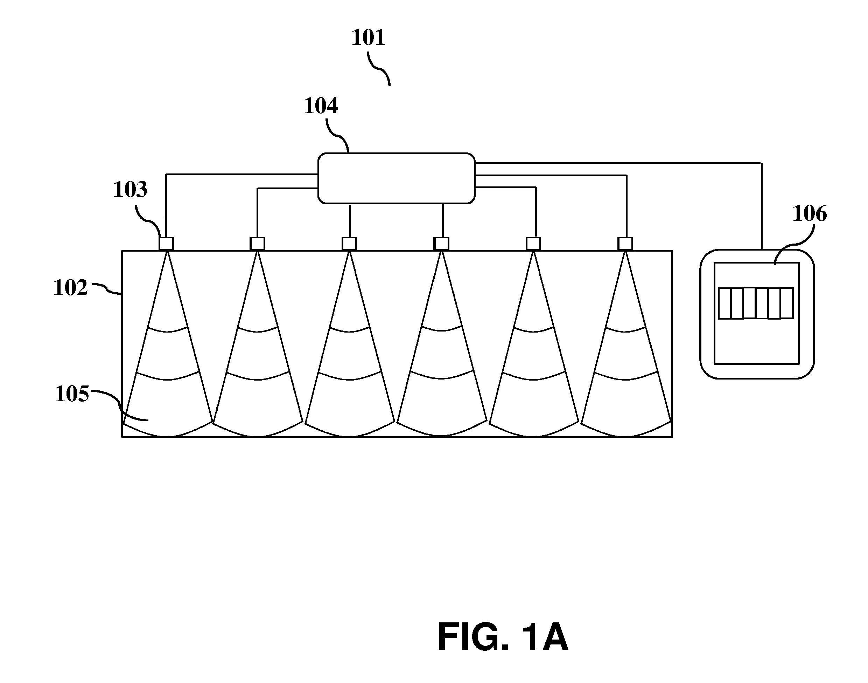

Figure 1A is a front view illustration of a first embodiment system **101**. Storage container **102** has a closeable opening (not pictured) and a monitoring system including sensors **103**, which in the embodiment are ultrasonic transducers located along a line at the top of storage container **102**. Sensors **103** are each configured to communicate with control circuit **104**. Control circuit **104** is configured to determine the amount of space that is occupied in container **102** using input from sensors **103**. In the embodiment, sensors **103** each emit an echolocation signal such as echolocation signal **105** (visualized in Figure 1A), which will strike the nearest surface in the signal's direction of travel and produce a return signal to the emitting sensor. Preferably, the frequency of the ultrasonic waves should be such that the waves are not audible to humans. In the embodiment, at sea level and nominal temperature of 25 °C, the propagation time is approximately 1100 ft/second for a 40 KHz signal. The time difference between the propagation of the signal into the air and its return is associated with two times the distance from the transducer to the nearest surface. If the area of the container monitored by the sensor is empty, the return signal will indicate that the echolocation signal struck the far side of container **102**. The use of multiple sensors allows container **102** to be separated into a number of virtual zones. In the embodiment, control circuit **104** is configured to communicate with display **106**. Display **106** is configured to present information regarding the amount of space occupied within container **102**.

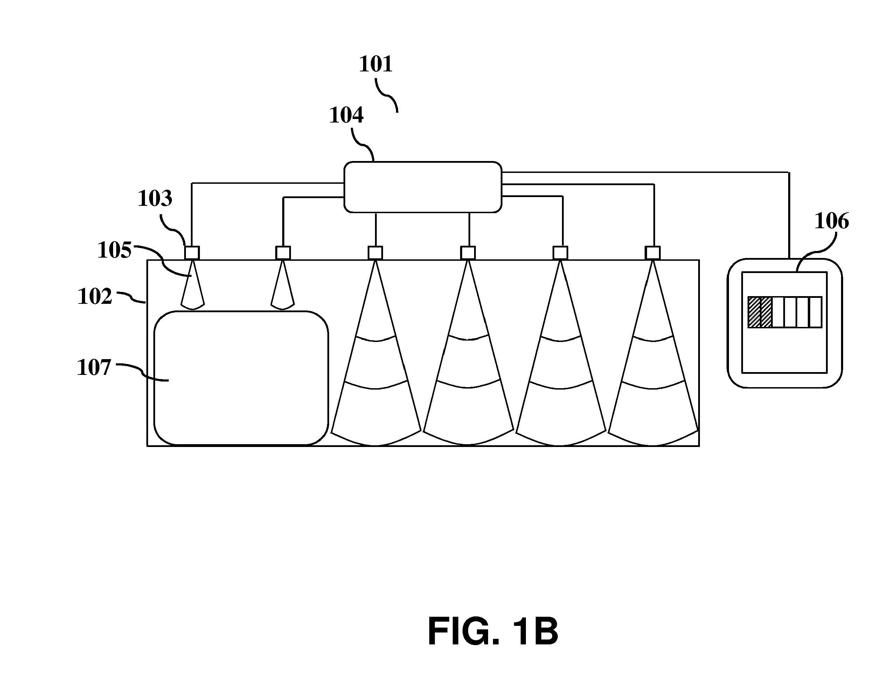

Figure 1B shows embodiment system **101** where a portion of container **102** is occupied by object **107**, such as a suitcase in an aircraft stowage bin. In this case, two of sensors **103** emit an echolocation signal that does not reach the bottom of container **102** but rather produces a return signal upon striking object **107**. Display **106** indicates that a portion of container **102** is occupied, or stated differently, the available space in container **102** has decreased. In the embodiment, display **106** is local to container **102**, allowing a user to immediately discern the remaining space within container **102** even when container **102** is in a closed state. Optionally, display **106** could be remote from container **102**, allowing a user to monitor the remaining capacity of container **102** while not being in physical proximity to it.

Additional elements may aid users in the better utilization of the system. A weight sensor can be included that provides a weight measurement for objects in container **102** to the control circuit, which then determines a measured weight. The measured weight, or other information derived therefrom, can be presented on display **106**. Such a feature allows the user to assess the loading of the container from a weight, as opposed to volumetric, perspective. Thus, loading limitations such as weight distribution in an aircraft can be accommodated.

Control circuit **104** can also receive a temperature input and an altitude input and use these inputs in determining the occupied volume by adjusting for differences in sensor measurements caused by changes in temperature and altitude.

A securement sensor can be included to monitor whether the closeable opening in the container is in an open state or a closed state. The display can present information about the securement state of the closeable opening. In certain embodiments, the container will have a first volume when the closeable opening is in a closed state and a second volume when the closeable opening is in an open state. By configuring the control circuit appropriately, the determination of the occupied volume can be adjusted to account for this dynamic, allowing the system to monitor a variable volume.

The display may take many various forms and make use of various technologies. For example the display may utilize a liquid crystal display (LCD) or light emitting diode (LED). Various sizes may also be employed, for instance there may be a small local LCD display next to each of a set of stowage bins and a larger central LED display in a particular area.

Communication among the elements of embodiments may be accomplished by a variety of widely available technologies, including both wired and wireless interfaces such as radio frequencies, Wi-Fi, etc.

Various sensor types are suitable for use with the disclosed and other embodiments, including ultrasonic, infrared, LED, photo sensors, lasers, etc. Generally, any device that can accurately range short distance measurements is suitable for use as a sensor in keeping with the present disclosure. Such sensors may vary widely in number and orientation within the containers, and may be employed in combination with one another. For instance, sensors may be directed from the bottom or back of the container. The operation of such sensors is described generally so as not to obscure the subject matter to which the present disclosure is directed, as such sensors are well known and documented.

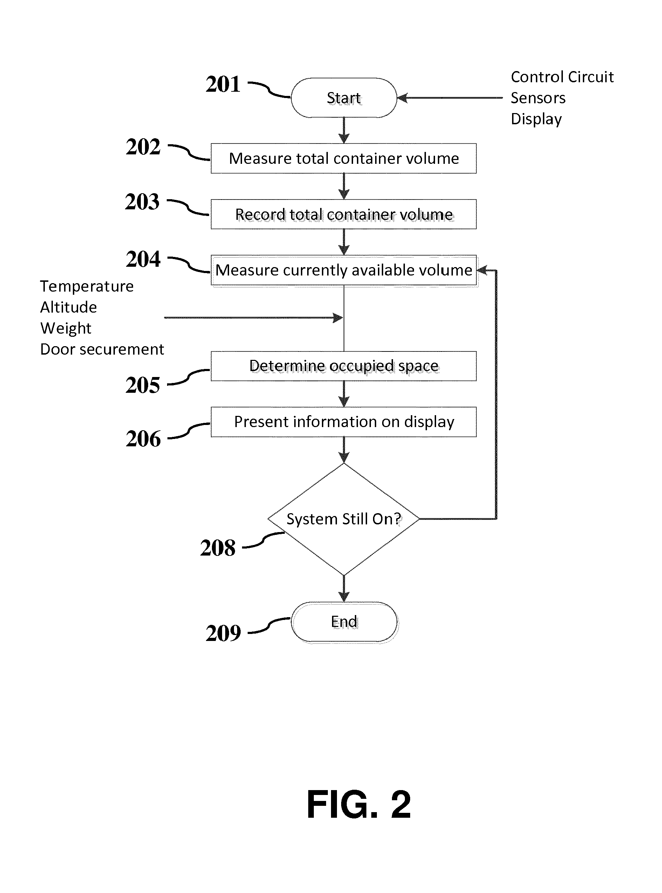

Figure 2 illustrates an embodiment by which the volume of a container is monitored. In initial step **201**, sensors, a control circuit and a display are provided. In step 202, the sensors are used to measure the total available volume in the container when it is empty. This volume is recorded in step **203** for later comparison. If the container has a different volume when open, this is also measured and record. In step **204**, the presently available volume in the container is measured using the sensors. Between steps **204** and **205**, additional inputs are received. These inputs may include, for instance, information regarding temperature, altitude and the securement state of the door of the container. In step **205**, the amount of occupied space in the container is determined. In this step, the additional inputs may be accommodated, for instance, by adjusting the measurements of the sensors according to phenomena caused by temperature and/or altitude. Furthermore, in some alternate embodiments the container will have a different volume when the door is open than when it is closed, for instance in drop-down overhead stowage bins in aircraft. This change in volume can be accommodated during the determination step. In step **206**, information regarding the container, including the amount of occupied space and optionally additional parameters such as the weight of objects in the container and the door securement state, are presented on the display. In step **208**, if the system remains active the process returns to step **204**, so that the occupied space of the container is continually monitored.

The measuring of the container volume when it is empty allows the system to be readily adaptable to various containers without, in many cases, the need for any redesign. In instances where a container has one volume when closed and another volume when open, both volumes can be determined so that adjustment can be made when the system is in operation.

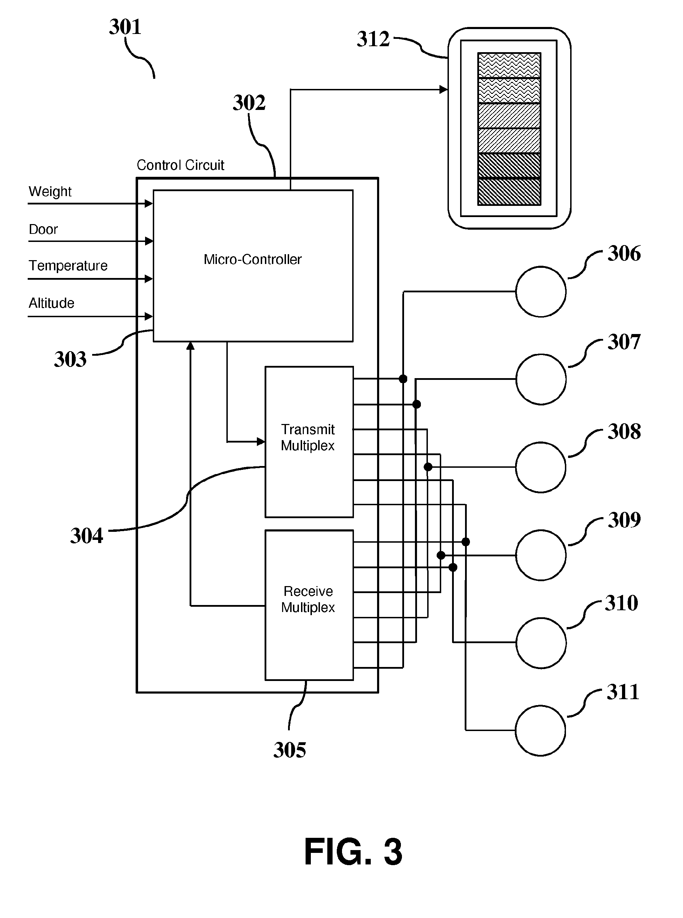

Figure 3 is an electronic schematic of embodiment **301**. Control circuit **302** contains micro-controller **303**, transmit multiplex **304** and receive multiplex **305**. Transmit transducers **306, 307, 308, 309, 310** and **311** are each connected to transmit multiplex **304** and receive multiplex **305**. Microcontroller **303** is configured to output to display **312**. In the embodiment, the display is a tri-color display. In the embodiment, microcontroller **303** also receives a weight, door, temperature and altitude input.

Microcontroller **303** provides sensor selection, transmit and receive functions as well as differential calculations. In operation, microcontroller **303** selects a first transmit transducer, in this case transmit transducer **306**, through transmit multiplexer **304** and sends a pulse train to transducer **306** using a transmit signal. This pulse train creates a high frequency signal. This pulse train transmits through the air in the container and is reflected by either the bottom of the container or an object within the container. The pulse train is received by transducer **306** and a receive signal is communicated to microcontroller **303** through the receiver multiplexer **305**. Microcontroller **303** then determines the amount of occupied volume in the section of the container associated with transducer **306**. This information can be presented on display **312**. The remaining transducers can then be used in kind, to create a full evaluation of the occupied space in the container.

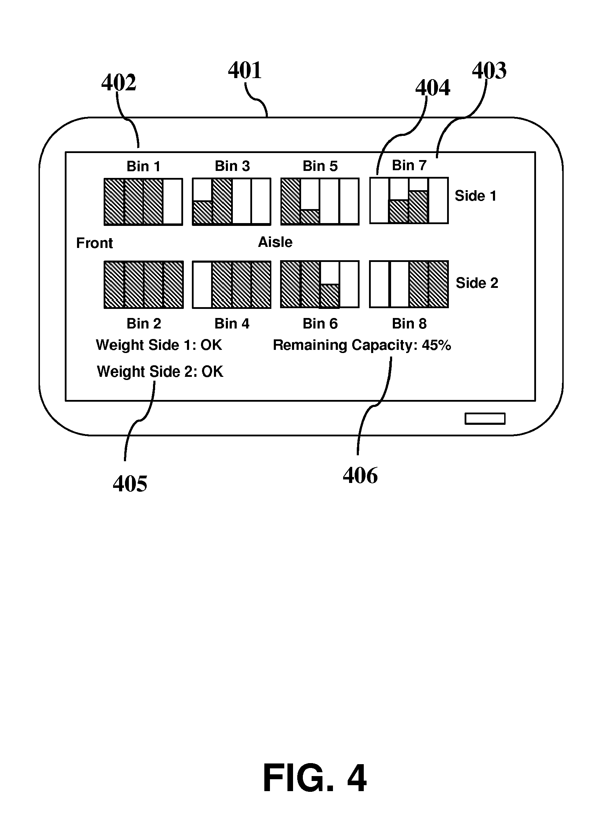

Figure 4 illustrates a display of an embodiment that is centrally located in the flight attendant area of a passenger aircraft. Electronic device **401** has display **402**. Presented on display **402** is information regarding the usage of a set of stowage bins. Bin indicator **403**, which relates to a particular stowage bin in the passenger aircraft, has indicator segments **404**, each of which relays information about the loading of a particular segment of the stowage bin. For example, a filled indicator segment may represent that a segment of the related stowage bin is completely occupied, a half filled indicator segment may represent that the stowage bin segment is halfway occupied, and an empty or blank indicator segment may represent that the stowage bin segment is empty. Thus, a flight crew member or passenger may readily observe display **402** and efficiently discern where there is space for loading passenger luggage and determine where particular items may fit within the stowage bins.

Weight indicator **405** alerts the user as to whether the stowage bins on either side of the aircraft have exceeded a proper weight balance. Optional indicators could provide additional information, such as whether particular stowage bins have their hatch secured. Notably, the information presented on the display need not be the exact measurements obtained from the sensors. For instance, capacity indicator **406** informs the user of the total remaining capacity within the stowage bins of the aircraft. Such an indicator could be useful, for example, in informing the flight crew that all of the stowage capacity of the aircraft is in use and that further passengers will need to check their carryon baggage.

There are many other methods by which to present information regarding the occupied or free volume of containers and other parameters. For instance, a three LED display of green, yellow and red may signify various levels of utilization. Similarly, a multi-segment display may have multiple LEDS such as three green, three yellow and three red, to produce a more granular representation. Information could also be displayed numerically, such as a on a LCD display presenting incremental steps of one percent. This information could also be communicated to a flight attendant control panel showing bin locations.

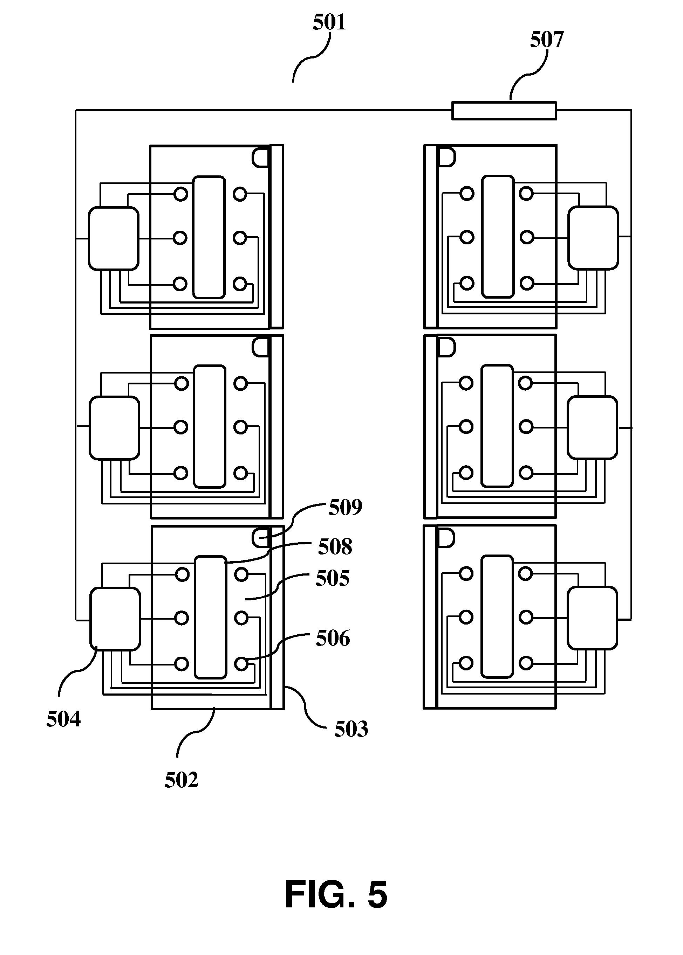

Figure 5 is a schematic top view of an embodiment system **501**, which is a system for monitoring the available space in a set of stowage bins in a commercial aircraft. Stowage bins **502** have securable doors **503**. Monitoring units associated with each of stowage bins **502** include control circuits **504** and sensor arrays **505**, each having a plurality of sensors **506**. In the embodiment, sensors **506** are arranged in each bin in two rows, to allow the system to determine whether objects are placed in the front or the back of the bin so as to allow the full use of the bin. Sensors **506** are each effective to measure the distance between the sensor and the nearest surface in a direction of interest. Control circuits **504** are configured to determine an amount of available space in the particular bins using the measurements of its associated sensor arrays **505** and communicate the amount of available space to display **507**. In the embodiment, display **507** is a centrally located display positioned in an aircraft flight attendant area. Display **507** is configured to present an amount of space information regarding the amount of available space.

In the embodiment, weight sensors **508** measure the weight of objects placed within the stowage bins. Information regarding the measured weight can be presented on display **507**. Additionally, latch sensors **509** serve to detect the securement state of stowage bins **502**, for example whether the bin doors are open or closed. Display **507** is further configured to present information regarding the securement state of stowage bins **502**. Also optionally, control circuits **504** receive temperature and altitude inputs, which can allow control circuits **504** to adjust the measurements of sensors **506** in order to produce an accurate determination of the available space in stowage bins **502**. Control circuits **504** can also use a securement state input in this determination, to account for a variance in the total volume of stowage bins **502**, for instance in the case of drop down stowage bins available on some aircraft.

## Claims

1. A storage container monitoring system, comprising:
at least one sensor (103; 306; 506) configured to communicate with a control circuit (104; 302; 504); and
wherein the control circuit (104; 302; 504) is configured to determine an amount of occupied space in an interior of a container (102; 502) having a closeable opening (503) using input from the sensors (103; 306; 506).

2. The system of claim 1, wherein
the control circuit (104; 302; 504) is configured to communicate with a display (106; 312; 402; 507); and
the display (106; 312; 402; 507) is configured to present an amount of information regarding the occupied space.

3. The system of claim 1 or 2, wherein the display (106; 312; 402; 507) is a centralized or a local display (402; 507).

4. The system of claim 1, 2 or 3, further comprising:
a weight sensor (508) configured to communicate with the control circuit (104; 302; 504); and
the control circuit (104; 302; 504) is further configured to determine a cumulative measured weight of at least one object (107) contained within the interior of the container (102; 502); and
the display (106; 312; 402; 507) is further configured to present the measured weight.

5. The system of any of claims 1 - 4, wherein the control circuit (104; 302; 504) is further configured to adjust the determination of the occupied space according to a measured temperature input and a measured altitude input.

6. The system of any of claims 1 - 5, further comprising:
a securement sensor (509) configured to monitor whether the closeable opening (503) is in an open state or a closed state; and
the display (106; 312; 402; 507) being further configured to present the state of the closeable opening.

7. The system of claim 6 wherein the container (102; 502) has a first volume when the closeable opening (503) is in a closed state and a second volume when the closeable opening (503) is in an open state.

8. The system of any of the preceding claims wherein the container (102; 502) is a passenger storage unit on a commercial aircraft.

9. A system for monitoring the available space in stowage bins each having a securable door, comprising:
a plurality of monitoring units (504, 505, 506), each associated with a particular stowage bin (102, 502) and having a control circuit (104; 302; 504) and at least one sensor array (505) having a plurality of sensors (103; 306; 506);
each particular sensor (103; 306; 506) being effective to measure the distance between the particular sensor and the nearest surface in a direction of interest;
the control circuit (104; 302; 504) associated with each bin (102, 502) being configured to determine an amount of available space in the particular bin using the measurements of its associated sensors (103; 306; 506) and communicate the amount of available space to at least one display (106; 312; 402; 507); and
the display (106; 312; 402; 507) being configured to present an amount of space information regarding the amount of available space.

10. The system of claim 9, further comprising:
at least one weight sensor (508) located in each particular stowage bin that is configured to measure the weight of at least one object (107) contained within the particular stowage bin; and
the display (106; 312; 402; 507) is configured to present an amount of weight information regarding the weight of the objects.

11. The system of claim 9 or 10, wherein each particular stowage bin has a latch sensor (509) configured to detect the securement state of the particular stowage bin; and
the display (106; 312; 402; 507) is configured to present an amount of securement information regarding the securement state of the stowage bins.

12. The system of claim 9,10 or 11, wherein the control circuit (104; 302; 504) is configured to utilize at least one of a temperature input, an altitude input and a securement state input in determining the amount of available space.

13. A method of monitoring the available volume in a container, comprising:
providing a control circuit (104; 302; 504) and at least one sensor (103; 306; 506);
measuring a total available volume when the container (102, 502) is empty;
measuring a presently available volume using the sensors (103; 306; 506);
determining an amount of occupied space;
communicating the amount of occupied space from the control circuit (104; 302; 504) to a display (106; 312; 402; 507); and
presenting on the display (106; 312; 402; 507) an amount of information regarding the occupied space, wherein the container (102; 502) is in particular an overhead storage unit on a commercial aircraft.

14. The method of claim 13, further comprising:
determining using at least one weight sensor a measured weight of at least one object (107) contained within the container (102, 502); and
presenting on the display (106; 312; 402; 507) an amount of weight information regarding the measured weight.

15. The method of claim 13 or 14, further comprising the steps of:
receiving to the control circuit (104; 302; 504) a measured temperature input and a measured altitude input; and
wherein during the step of determining the occupied space, accounting for the measured temperature and measured altitude inputs; and/or
further comprising
providing a door sensor (509);
monitoring a securement state of a closeable opening of the container (102; 502);
and
presenting on the display (106; 312; 402; 507) an amount of securement information regarding the state of the closeable opening; and/or
wherein
the container (102; 105) has a first volume when the closeable opening (503) in is in a closed securement state and a second volume when the closeable opening (503) is in an open securement state; and
during the step of determining the occupied space, adjusting the presently available volume according to the securement state; and/or
wherein a type of the sensors (103; 306; 506) is selected from the group consisting of ultrasonic, infrared, photo, LED, and laser.
